# EUROPEAN PATENT APPLICATION

(11) **EP 4 556 986 A1**
(43) Date of publication of application: **21.05.2025**
(21) Application number: 24212256.2
(22) Date of filing: 12.11.2024
(51) Int. Cl.: G02B 27/00, G02B 27/01

(54) **HEAD-UP DISPLAY DEVICE**

(30) Priority: 14.11.2023 CN 202311511541
(71) Applicant: Coretronic Corporation, Hsin-Chu 300 (TW)
(72) Inventor: PENG, KUEI-EN, 300 Hsin-Chu (TW); KUO, TAO-HUNG, 300 Hsin-Chu (TW); LU, YI-TIEN, 300 Hsin-Chu (TW); LEE, PO-CHE, 300 Hsin-Chu (TW)
(74) Representative: Ter Meer Steinmeister & Partner

(57) **Abstract**

Disclosed is a head-up display device which includes a projection module and an image light transmission module. The projection module includes an image light source and a projection lens. The image light source is disposed to provide an image beam. The projection lens has a lateral chromatic aberration of a projection lens. The image light transmission module includes an optical waveguide element and an optical lens and has a lateral chromatic aberration of an image light transmission. The optical waveguide element is disposed on a transmission path of the image beam from the projection lens and guides the image beam to form a display beam. The lateral chromatic aberration of the projection lens is a reverse chromatic aberration. The lateral chromatic aberration of the image light transmission module is a positive chromatic aberration. The head-up display device disclosed makes the display image have good optical quality.

## Description

This application claims the priority benefit of China application serial no. 202311511541.6, filed on November 14, 2023.

### BACKGROUND

### Technical Field

The disclosure relates to a display device, and in particular to a head-up display device.

### Description of Related Art

In today's society, in addition to performance, the requirements of the interior decoration and safety equipment for transportation have also begun to get attention. The assistance of these current technological products (such as an in-vehicle voice navigation system, a voice collision warning system, and so on) has indeed reduced the incidence of accidents caused by long-term fatigue driving and lack of concentration of the driver. But at the same time, a non-voice information display device is usually installed on the dashboard, which can easily affect driving safety when the driver lower his head to look at the non-voice information display device.

A head-up display (HUD) presents the information the driver needs in front of the driver, so that the driver does not have to lower his head or turn his head in distraction, which can contribute to driving safety. If the head-up display is installed in a vehicle, images with different traffic information or assisted driving functions can be displayed at different locations when the driver is driving, so that the driver can obtain the corresponding information at different locations on the windshield. However, the current head-up displays adopting optical waveguide have a problem of lateral chromatic aberration. The so-called lateral chromatic aberration means that different colors of light have different wavelengths in the same medium, and the transmission paths of light (for example, refraction) are also different. Due to different transmission paths of light, the different colors of light that should be originally transmitted to the same location are transmitted to the adjacent locations, resulting in color separation or edge blur in the image. The type of chromatic aberration is called the lateral chromatic aberration. Also, the lateral chromatic aberration is generally more severe at the edges of the image.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The disclosure provides a head-up display device which can reduce a lateral chromatic aberration of an image, so that a display image has good optical quality.

Other objects and advantages of the disclosure can be further understood from the technical features disclosed.

The object is solved by the features of the independent claims. Preferred embodiments are given in the dependent claims.

In order to achieve one, part or all of the above objectives or other objectives, the disclosure provides a head-up display device which includes a projection module and an image light transmission module. The projection module includes an image light source and a projection lens. The image light source is disposed to provide an image beam. The projection lens is disposed on a transmission path of the image beam. The projection lens has a lateral chromatic aberration of the projection lens. The image light transmission module includes an optical waveguide element and an optical lens and has a lateral chromatic aberration of the image light transmission module. The optical waveguide element is disposed on the transmission path of the image beam from the projection lens and guides the image beam to form a display beam. The optical lens is disposed on a transmission path of the display beam from the optical waveguide element. The lateral chromatic aberration of the projection lens is a reverse chromatic aberration. The lateral chromatic aberration of the image light transmission module is a positive chromatic aberration.

In one or more embodiments, the projection lens may comprise at least two first lens elements and at least one second lens element.

In one or more embodiments, an Abbe number of each of the at least one second lens element may be less than 25.

In one or more embodiments, an average Abbe number of the at least two first lens elements may be more than two times as an average Abbe number of the at least one second lens element.

In one or more embodiments, a number of the at least one second lens element may be plural.

In one or more embodiments, there may be at least one of the at least two first lens elements between the adjacent at least one second lens element.

In one or more embodiments, the projection lens may be composed of the at least two first lens elements and the at least one second lens element.

In one or more embodiments, a number of the at least two first lens elements may be five.

In one or more embodiments, a number of the at least one second lens element may be two.

In one or more embodiments, the image beam may form an image with a plurality of image pixels.

In one or more embodiments, the image may have the lateral chromatic aberration of the projection lens.

In one or more embodiments, a width of the lateral chromatic aberration of the projection lens may be greater than a width of one of the plurality of image pixels.

In one or more embodiments, the display beam passing through the optical lens may form a display image.

In one or more embodiments, the display image may have a lateral chromatic aberration of the head-up display device.

In one or more embodiments, the lateral chromatic aberration of the head-up display device may be less than the lateral chromatic aberration of the projection lens.

In one or more embodiments, the display image may have a plurality of display pixels.

In one or more embodiments, the width of the lateral chromatic aberration of the head-up display device may be smaller than a width of one of the plurality of display pixels.

In one or more embodiments, the optical waveguide element may comprise a light entrance area and a light exit area.

In one or more embodiments, the projection module may be arranged corresponding to the light entrance area.

In one or more embodiments, the optical lens may be arranged corresponding to the light exit area.

In one or more embodiments, the optical waveguide element may comprise a first surface, a second surface, and a lateral surface.

In one or more embodiments, the lateral surface may be connected between the first surface and the second surface.

In one or more embodiments, the light entrance area and the light exit area may be disposed on the first surface and the second surface respectively.

In one or more embodiments, there may be no reflective element between the optical lens and the light exit area.

In one or more embodiments, the optical lens may be a free-form surface lens.

In one or more embodiments, at least one of the at least one second lens element may be a positive lens.

Based on the above, embodiments of the disclosure have at least one of the following advantages or effects. In the head-up display device of the disclosure, the head-up display device includes the projection module and the image light transmission module. Among them, the lateral chromatic aberration of the projection lens is the reverse chromatic aberration, and the lateral chromatic aberration of the image light transmission module is the positive chromatic aberration. Therefore, the light beam may have an optical effect of the reverse chromatic aberration after passing through the projection lens. In this way, the reverse chromatic aberration generated by the projection lens and the positive chromatic aberration generated by the image light transmission module can be offset by an optical design, thereby reducing the degree of the lateral chromatic aberration generated by the image light transmission module, so that the display image of the head-up display device has good optical quality.

Other objectives, features and advantages of the disclosure will be further understood from the further technological features disclosed by the embodiments of the disclosure where there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the invention and, together with the description, serve to explain the principles of the disclosure.
FIG. 1 is a schematic diagram of an application of a head-up display device according to an embodiment of the disclosure.
FIG. 2 is a schematic diagram of a projection lens in FIG. 1.
FIG. 3 is a schematic diagram of a lateral chromatic aberration of the projection lens in FIG. 2.
FIG. 4 is a schematic diagram of a lateral chromatic aberration of an image light transmission module of the head-up display device in FIG. 1.
FIG. 5 is a modulation transfer function diagram of the projection lens in FIG. 2.
FIG. 6 is a field curvature diagram of the projection lens in FIG. 2.
FIG. 7 is a distortion aberration diagram of the projection lens in FIG. 2.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing", "faces", and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

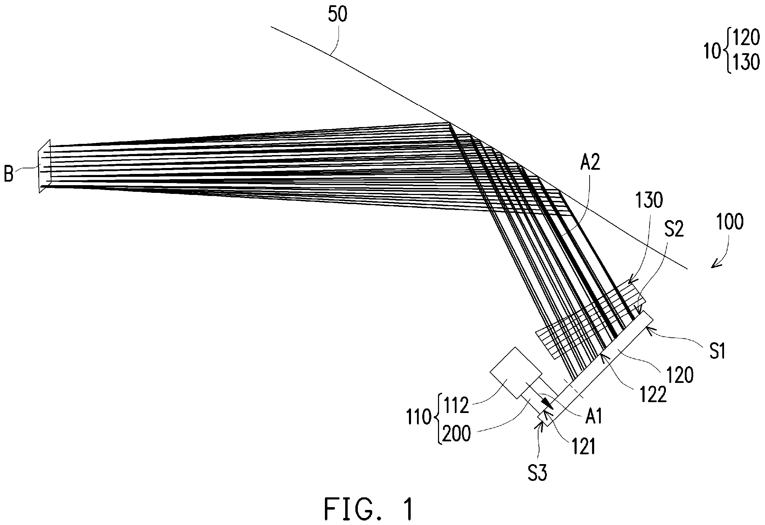

FIG. 1 is a schematic diagram of an application of a head-up display device according to an embodiment of the disclosure. Referring to FIG. 1, this embodiment provides a head-up display device 100 which includes a projection module 110 and an image light transmission module 10. The image light transmission module 10 includes an optical waveguide element 120 and an optical lens 130. The projection module 110 provides an image beam A1 to the optical waveguide element 120 of the image light transmission module 10, and the optical waveguide element 120 guides the image beam A1 to form a display beam A2, then the display beam A2 is transmitted to an external imaging element 50 by the optical lens 130. The display beam A2 from the head-up display device 100 reflected by the imaging element 50 reaches the eyes of the viewer B (for example, a driver of a vehicle), allowing the viewer B to view a virtual image with driving information in front of the imaging element 50. The imaging element 50 is, for example, a windshield or a see-through combiner (for example, a semi-transparent element), and so on, but the disclosure is not limited thereto.

The optical waveguide element 120 is disposed on a transmission path of the image beam A1 from the projection module 110 and guides the image beam A1 to form the display beam A2. The optical waveguide element 120 includes a light entrance area 121 and a light exit area 122. The projection module 110 is arranged corresponding to the light entrance area 121 (i.e., the image beam A1 enters the optical waveguide element 120 via the light entrance area 121). The optical lens 130 is arranged corresponding to the light exit area 122 (i.e., the display beam A2 transmits out of the optical waveguide element 120 via the light exit area 121). For example, in this embodiment, the optical waveguide element 120 includes a first surface S1, a second surface S2, and a lateral surface S3. The lateral surface S3 is connected between the first surface S1 and the second surface S2. The light entrance area 121 and the light exit area 122 are disposed on the second surface S2. However, in another embodiment, the light entrance area 121 and the light exit area 122 may be disposed on the first surface S1 and the second surface S2 respectively, but the disclosure is not limited thereto. In another embodiment, the optical waveguide element 120 may include a plate body, light-guiding elements, and/or optical coupling-out structures. The image beam A1 is guided by the light-guiding elements to transmit in the optical waveguide element 120, and the image beam A1 is guided by the optical coupling-out structures and then emits from the optical waveguide element 120 to form the display beam A2, but is not limited thereto.

The optical lens 130 is disposed on a transmission path of the display beam A2 from the optical waveguide element 120. Specifically, in this embodiment, the optical lens 130 includes a free-form surface lens. The number of lenses of the optical lens 130 is one or more than two, and therefore the distortion of the image may be eliminated. In an embodiment, the number of lenses of the optical lens 130 is, for example, one. In another embodiment, the number of lenses of the optical lens 130 is two, such as a biconcave lens and a biconvex lens (at least one of which is the free-form surface lens), both of which are sequentially disposed on the transmission path of the display beam A2 from the optical waveguide element 120. In addition, it is worth mentioning that in this embodiment, the head-up display device 100 does not need to be equipped with an additional reflector. For example, no reflective element is disposed between the optical lens 130 and the light exit area 122 of the optical waveguide element 120 (on the light transmission path). In other words, compared with a traditional head-up display, the head-up display device 100 of this embodiment has an effect of reducing the device size.

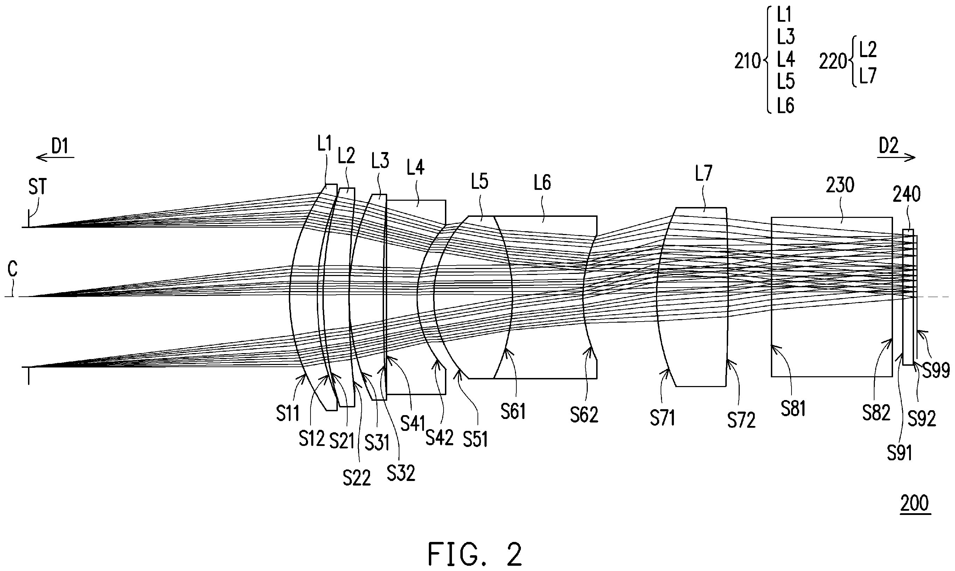

FIG. 2 is a schematic diagram of a projection lens in FIG. 1. Referring to FIG. 1 and FIG. 2, the projection module 110 includes an image light source 112 and a projection lens 200. The image light source 112 is disposed to provide the image beam A1. In this embodiment, the image light source 112 includes, for example, an image generating element such as a light source module and/or an optical engine module (not shown in figures). The image light source 112 is, for example, an image light source of a projector, but is not limited thereto. The projection lens 200 is disposed on the transmission path of the image beam A1, is disposed to project the image beam A1 out of the projection module 110, and transmits the image beam A1 toward the optical waveguide element 120.

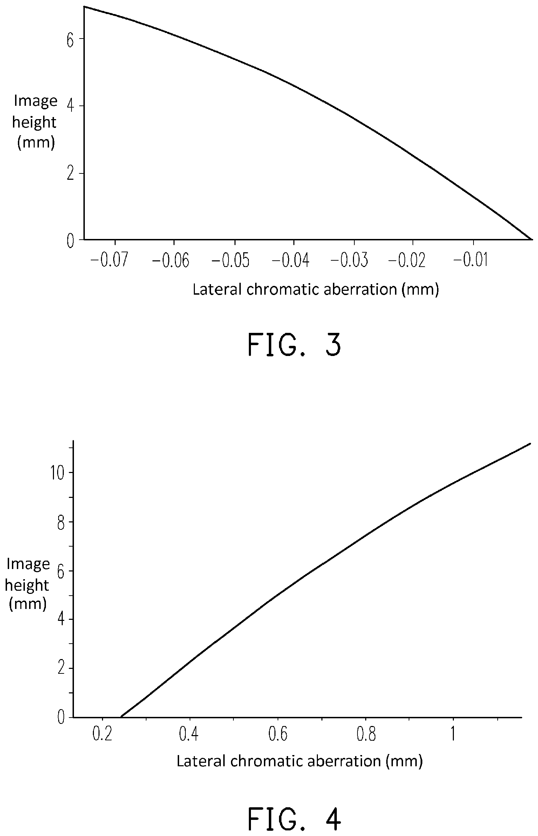

FIG. 3 is a schematic diagram of a lateral chromatic aberration of the projection lens in FIG. 2. FIG. 4 is a schematic diagram of a lateral chromatic aberration of an image light transmission module of the head-up display device in FIG. 1. Among them, the lateral chromatic aberration diagram shown in FIG. 3 is the lateral chromatic aberration generated by the light beam passing through the projection lens 200 alone, and the lateral chromatic aberration diagram shown in FIG. 4 is the lateral chromatic aberration (in particular, the imaging element 50 does not generate the effect of the lateral chromatic aberration on the light beam, or has little impact) generated by the light beam passing through the image light transmission module 10 (that is, the optical waveguide element 120 and the optical lens 130) alone. In an embodiment, the image light transmission module 10 is, for example, the other optical element on a light path (for example, between the projection lens 200 and the imaging element 50) of the image beam A1 and the display beam A2, except for the projection module 110 (the projection lens 200). Referring to FIG. 2 to FIG. 4, it is worth mentioning that the projection lens 200 includes at least two first lens elements 210 and at least one second lens element 220. The Abbe number of each of the first lens elements 210 is greater than or equal to 25, and the Abbe number of each of the second lens elements 220 is less than 25. In a preferred embodiment, the average Abbe number of the first lens elements 210 is more than twice as the average Abbe number of the second lens elements 220. With this design, the light beam may have an optical effect of a reverse chromatic aberration after passing through the projection lens 200. That is, when a light beam without lateral chromatic aberration passes through the projection lens 200, the light beam (e.g., the image beam A1) has the lateral chromatic aberration of the projection lens (i.e., the projection lens 200 has lateral chromatic aberration of the projection lens) on an image surface (compared to a center of an image). The lateral chromatic aberration of the projection lens is that a lateral focus position of a short wavelength (for example, blue light) beam minus a lateral focus position of a long wavelength (for example, red light) beam is less than 0 (as shown in FIG. 3, a value of the lateral chromatic aberration is negative, that is, the reverse chromatic aberration). When a light beam without lateral chromatic aberration passes through the image light transmission module 10, the light beam has the lateral chromatic aberration of the image light transmission module (i.e., the image light transmission module 10 has lateral chromatic aberration of the image light transmission module) on the image surface. The lateral chromatic aberration of the image light transmission module is that the lateral focus position of the short wavelength beam minus the lateral focus position of the long wavelength beam is greater than 0 (as shown in FIG. 4, a value of the lateral chromatic aberration is positive, that is, a positive chromatic aberration). Specifically, the lateral chromatic aberration of the image light transmission module 10 may, for example, emit a light beam without lateral chromatic aberration (or with very little lateral chromatic aberration) into a light entrance (for example, the light entrance area 121 of the optical waveguide element 120) of the image light transmission module 10 and measure the lateral chromatic aberration of the emitted light beam at a light exit (for example, a surface of the optical waveguide element 120 away from the optical lens 130) of the image light transmission module 10. Therefore, a chromatic aberration direction of the lateral chromatic aberration of the projection lens (i.e., first lateral chromatic aberration) is different from a chromatic aberration direction of the lateral chromatic aberration of the image light transmission module (i.e., second lateral chromatic aberration), as shown in the difference between FIG. 3 and FIG. 4.

On the other hand, if the image beam A1 from the projection lens 200 may form an image with multiple image pixels, then the image has the lateral chromatic aberration of the projection lens (or the reverse chromatic aberration). The lateral chromatic aberration of the projection lens is, for example, the lateral chromatic aberration at a junction of an edge area (for example, a width of the edge area of the image is 25% of a width of the image) of the image and the center area (except for the image area of the edge area of the image) of the image. And if the display beam A2 from the optical lens 130 may form the display image with multiple display image pixels, then the display image has the lateral chromatic aberration of the head-up display device (the definition of the lateral chromatic aberration of the head-up display device is similar to the lateral chromatic aberration of the projection lens; the lateral chromatic aberration of the head-up display device is, for example, the lateral chromatic aberration of the image observed by the viewer B). In this way, the reverse chromatic aberration generated by the projection lens 200 and the positive chromatic aberration generated by the image light transmission module 10 may be offset, thereby reducing the degree of the lateral chromatic aberration generated by the image light transmission module 10, so that the display image of the head-up display device 100 has good optical quality. When the lateral chromatic aberration is calculated, the width of the lateral chromatic aberration may be defined as a maximum distance from the positions of different visible wavelengths on a best focus plane. In a preferred embodiment, the width of the lateral chromatic aberration of the projection lens may be designed to be greater than the width of 10 image pixels. Therefore, by offsetting the lateral chromatic aberration generated by the image light transmission module 10 through the design described above, the lateral chromatic aberration of the head-up display device may be less than the lateral chromatic aberration of the projection lens, so that the width of the lateral chromatic aberration of the head-up display device is smaller than the width of one display image pixel, thereby achieving an effect of reducing the lateral chromatic aberration.

Referring to FIG. 2 continuously, based on the principle described above, this embodiment provides a description of an embodiment as follows. The number of at least one second lens element 220 of the projection lens 200 is plural, and there is at least one first lens element 210 between the adjacent second lens elements 220. For example, in this embodiment, the projection lens 200 is along an optical axis C sequentially including and aperture diaphragm ST, a first lens L1, a second lens L2, a third lens L3, a fourth lens L4, a fifth Lens L5, a sixth lens L6, a seventh lens L7, a prism 230, a color filter 240, and an imaging surface S99 from an object side D1 to an image side D2. Among them, the first lens element 210 includes the first lens L1, the third lens L3, the fourth lens L4, the fifth lens L5, and the sixth lens L6, and the second lens element 220 includes the second lens L2 and the seventh lens L7. In other words, the lens element of the projection lens 200 is composed of the first lens element 210 and the second lens element 220. The number of the first lens element 210 is five. The number of the second lens element 220 is two.

Specifically, in this embodiment, the first lens L1 is a concave-convex lens with a convex surface facing the aperture diaphragm ST. In addition, the fifth lens L5 and the sixth lens L6 are double cemented lenses. An absolute value of a focal length of the double cemented lens is greater than 35, and an absolute value of the Abbe number difference is greater than 50. Due to the above conditions, the projection lens 200 of this embodiment has a better effect of the reverse chromatic aberration. In this embodiment, the lateral reverse chromatic aberration generated by the projection lens 200 is greater than the width of 10 image pixels. The actual design of each element of the projection lens 200 can be seen in Table 1 below. In Table 1, the optical elements from the aperture diaphragm ST to the imaging surface S99 respectively have the object lateral surfaces S11, S21, S31, S41, S51, S61, S71, S81, and S91 from the object side D1 to the image side D2, and the image lateral surfaces S12, S22, S32, S42, S62, S72, S82, and S92 from the object side D1 to the image side D2.

**Table I**

| Element | Surface | Radius of curvature (mm) | Abbe number (Vd) |
|---|---|---|---|
| ST | | Infinity | |
| L1 | S11 | 21.8 | 49.6 |
| | S12 | 29.8 | |
| L2 | S21 | 41.1 | 17.5 |
| | S22 | 83.4 | |
| L3 | S31 | 27.3 | 49.6 |
| | S32 | 159.3 | |
| L4 | S41 | 878.9 | 29.5 |
| | S42 | 12.0 | |
| L5 | S51 | 13.1 | 81.5 |
| L6 | S61 | -21.8 | 25.4 |
| | S62 | 16.7 | |
| L7 | S71 | 26.6 | 18.9 |
| | S72 | -471.8 | |
| 230 | S81 | Infinity | 56.7 |
| | S82 | Infinity | |
| 240 | S91 | Infinity | 64.2 |
| | S92 | Infinity | |
| | S99 | Infinity | |

It can be seen from the Table 1 that in this embodiment, 47.12, the average Abbe number of the first lens element 210 (that is, the first lens L1, the third lens L3, the fourth lens L4, the fifth lens L5, and the sixth lens L6) is more than two times as 18.2, the average Abbe number of the second lens element 220 (that is, the second lens L2 and the seventh lens L7). In an embodiment where the number of lenses of the second lens element 220 is only one, the second lens element 220 may be selectively disposed at a position closer to the image light source 112. In another embodiment where the number of lenses of the second lens element 220 may be three or more, the number of lenses of the first lens element 210 may also be greater than five, and there is at least one first lens element 210 between the adjacent second lens elements 220. It should be noted that no matter the number of second lens elements 220 is one, two or more, at least one second lens element 220 may be a positive lens (an refractive index is positive).

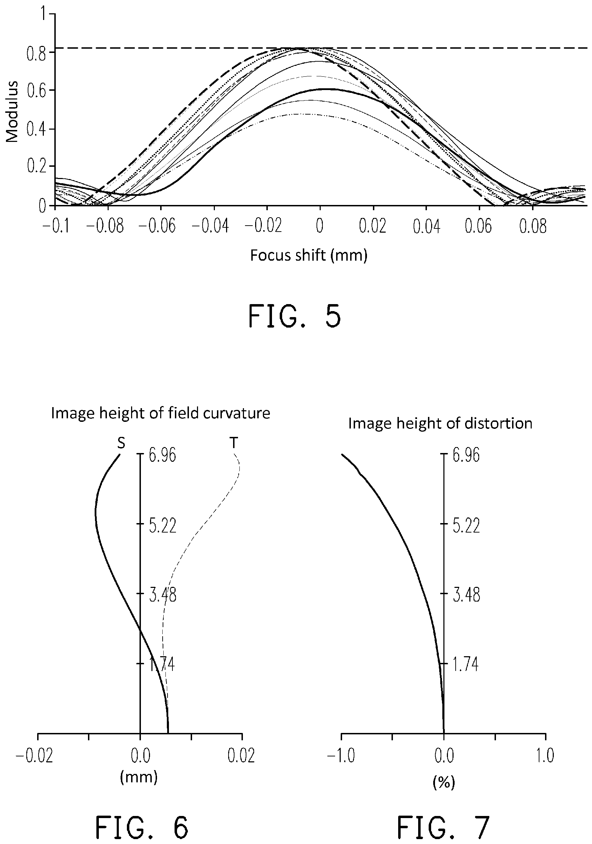

FIG. 5 is a modulation transfer function diagram of the projection lens in FIG. 2. Referring to FIG. 5, FIG. 5 shows the modulation transfer function (MTF) of the projection lens 200 at different image heights, where a horizontal axis is a focus shift, and a vertical axis is a modulus of an optical transfer function. It may be verified from this that an optical transfer function curve displayed by the projection lens 200 of this embodiment is within a standard range, so the projection lens 200 has good optical imaging quality, as shown in FIG. 5.

FIG. 6 is a field curvature diagram of the projection lens in FIG. 2. FIG. 7 is a distortion aberration diagram of the projection lens in FIG. 2. Referring to FIG. 6 and FIG. 7, the diagram of FIG. 6 illustrates a field curvature aberration in a sagittal direction and a field curvature aberration in a tangential direction on the imaging surface of the projection lens 200 in FIG. 2. The focal length variation in the main visible wavelengths falls within ±0.02 mm in the entire view field, indicating that the projection lens 200 of this embodiment may effectively eliminate the aberration. The diagram of FIG. 7 illustrates the distortion aberration on the imaging surface of the projection lens 200 in FIG. 2. Also, the distortion aberration diagram of FIG. 7 shows that the distortion aberration of the projection lens 200 of this embodiment may be maintained within the range of ±1.0%, indicating that the distortion aberration of this embodiment meets a general requirement of the imaging quality.

To sum up, the head-up display device of the embodiment of the disclosure has at least one of the following advantages: in the head-up display device of the disclosure, the head-up display device includes a projection module, an optical waveguide element, and an optical lens. Among them, the projection module includes an image light source and a projection lens. The projection lens includes at least two first lens elements and at least one second lens element, and the Abbe number of the second lens element is less than 25. Therefore, the light beam may have the optical effect of the reverse chromatic aberration after passing through the projection lens. In this way, the reverse chromatic aberration generated by the projection lens and the positive chromatic aberration generated by the image light transmission module may be offset by the optical design, thereby reducing the degree of the lateral chromatic aberration generated by the image light transmission module, so that the display image of the head-up display device has good optical quality.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the disclosure" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. A head-up display device, comprising:
a projection module (110), comprising an image light source (112) and a projection lens (200), wherein the image light source (112) is disposed to provide an image beam (A1), the projection lens (200) is disposed on a transmission path of the image beam (A1), and the projection lens (200) has a lateral chromatic aberration; and
an image light transmission module (10) having a lateral chromatic aberration, wherein the image light transmission module (10) comprises:
an optical waveguide element (120), disposed on the transmission path of the image beam (A1) from the projection lens (200), and guiding the image beam (A1) to form a display beam (A2); and
an optical lens (130), disposed on a transmission path of the display beam (A2) from the optical waveguide element (120), wherein the lateral chromatic aberration of the projection lens (200) is a reverse chromatic aberration, and the lateral chromatic aberration of the image light transmission module (10) is a positive chromatic aberration.

2. The head-up display device according to claim 1, wherein the projection lens (200) comprises at least two first lens elements (210) and at least one second lens element (220), preferably an Abbe number of each of the at least one second lens element (220) is less than 25.

3. The head-up display device according to claim 2, wherein an average Abbe number of the at least two first lens elements (210) is more than two times as an average Abbe number of the at least one second lens element (220).

4. The head-up display device according to claim 2 or 3, wherein a number of the at least one second lens element (220) is plural, and there is at least one of the at least two first lens elements (210) between the adjacent at least one second lens element (220).

5. The head-up display device according to claim 2, 3 or 4, wherein the projection lens (200) is composed of the at least two first lens elements (210) and the at least one second lens element (220), a number of the at least two first lens elements (210) is five, and a number of the at least one second lens element (220) is two.

6. The head-up display device according to any one of the preceding claims, wherein the image beam (A2) forms an image with a plurality of image pixels, the image has the lateral chromatic aberration of the projection lens (200), and a width of the lateral chromatic aberration of the projection lens is greater than a width of one of the plurality of image pixels.

7. The head-up display device according to claim 6, wherein the display beam (A2) passing through the optical lens (130) forms a display image, the display image has a lateral chromatic aberration of the head-up display device (100), and the lateral chromatic aberration of the head-up display device (100) is less than the lateral chromatic aberration of the projection lens (200).

8. The head-up display device according to claim 7, wherein the display image has a plurality of display pixels, and the width of the lateral chromatic aberration of the head-up display device (100) is smaller than a width of one of the plurality of display pixels.

9. The head-up display device according to any one of the preceding claims, wherein the optical waveguide element (120) comprises a light entrance area (121) and a light exit area (122), the projection module (110) is arranged corresponding to the light entrance area (121), and the optical lens (130) is arranged corresponding to the light exit area (122).

10. The head-up display device according to claim 9, wherein the optical waveguide element (120) comprises a first surface, a second surface, and a lateral surface, the lateral surface is connected between the first surface and the second surface, and the light entrance area (121) and the light exit area (122) are disposed on the first surface and the second surface respectively.

11. The head-up display device according to claim 9 or 10, wherein there is no reflective element between the optical lens (130) and the light exit area (122).

12. The head-up display device according to any one of the preceding claims, wherein the optical lens (130) is a free-form surface lens.

13. The head-up display device according to claim 2, 3, 4 or 5, wherein at least one of the at least one second lens element (220) is a positive lens.
